# EUROPÄISCHE PATENTANMELDUNG

(11) **EP 1 598 652 A2**
(43) Veröffentlichungstag der Anmeldung: **23.11.2005**
(21) Anmeldenummer: 05010579.0
(22) Anmeldetag: 17.05.2005
(51) Int. Cl.: G01L 23/22

(54) **Vorrichtung zur Klopfgeräuscherkennung für einen Verbrennungsmotor**

(30) Priorität: 18.05.2004 DE 102004024570
(71) Anmelder: DaimlerChrysler AG, 70567 Stuttgart (DE)
(72) Erfinder: Fischer, Werner, 71384 Weinstadt (DE); Klein, Rudolf, 71384 Weinstadt (DE)

(57) **Zusammenfassung**

Die Erfindung betrifft eine Vorrichtung zur Klopfgeräuscherkennung für einen Verbrennungsmotor mit einem Schwingungsaufnehmer (3.6). erfindungsgemäß ist mindestens ein Frequenzträgerelement (3.1, 3.2, 3.3, 3.4) vorgesehen, welches am Entstehungsort (5, 6.1, 6.2, 6.3, 6.4) der Klopfgeräusche angekoppelt ist und die Klopfgeräusche Vom Entstshungsort (5, 6.1, 6.2, 6.3, 6.4) zum Schwingungsaufnehmer (3.6) überträgt.

## Beschreibung

Die Erfindung betrifft eine Vorrichtung zur Khlopfgeräuscherkennung für einen Verbrennungsmotor nach dem Oberbegriff des Patentanspruchs 1.

Beim Betrieb eines Verbrennungsmotors werden Störgeräusche durch bewegte Bauteile wie z. B. Komponenten der Gaswechselsteuerung, Grundtriebwerk, Ausgleichswellen, Kolbenspritzen, innerhalb und außerhalb des Motors angebrachte Anbauteile, sowie durch pneumatische und/oder hydraulische Strömungsmedien hervorgerufen. Diese Störgeräusche sind selten zu vermeiden.

Bei herkömmliches Klopfgeräuscherkennungsvorrichtungen mittels Körperschall erfolgt die Übertragung der Klopfgeräusche zwischen Entstehungsort und Sensorort über die Grundkonfiguration des Motorgehauses bzw. des Kurbelgehäuses und/oder des Zylinderkopfs bzw. deren Verbindungselemente. Gegebenenfalls können entsprechende konstruktive Maßnahmen wie Gehäuseverrippung oder ähnliches diese Übertragungswege begünstigen bzw. unterstützen. Diese Art der Körperschallübertragung kann den Nachteil aufweisen, dass jegliche Störgeräusche, welche die gleiche Frequenz wie die Nutzfrequenz haben, dem Klopfgeräusch, überlagert sind. Bei einem gegenphasigen Signalverlauf kann, dies sogar zur Auslöschung des Signals führen. Ein sauberes und sicheres Erkennen einer klopfenden Verbrennung in allen Motorbetriebszuständen ist .somit oftmals trotz Einsatz von mehreren Klopfsensoren nur unzureichend gewährleistet. Bekannte und praktizierte Softwaremaßnahmen können in diesen Fällen nur sehr begrenzt befriedigende Lösungsansätze liefern.

In den Dokumenten DE 30 08 780 C2, DE 195 24 149 C2 und DE 195 24 152 C1 werden jeweils Vorrichtungen zur Klopfgeräuscherkennung beschrieben, die als Schwingungsaufnehmer piezoelektrische Elemente umfassen, die direkt am Entstehungsort der Klopfgeräusche bzw. an angrenzenden Gehäuseteilen angeordnet sind.

Insbesondere bei modernen Leichtmetallmotoren, bei denen das Kurbelgehäuse bzw, der Zylinderkopf aus Aluminium oder Aluminiumlegierungen hergestellt sind, wird die Klopfgeräuschübertragung infolge hochfrequenter nutzsignalidentischer Störgeräusche erheblich beeinträchtigt.

Aufgabe der Erfindung ist es, eine verbesserte Vorrichtung zur Klopfgeräuscherkennung für einen Verbrennungsmotor, insbesondere für Leichtmetallmotoren, zur Verfügung zu stellen.

Die Erfindung löst diese Aufgabe durch Bereitstellung einer Vorrichtung zur Klopfgeräuscherkennung mit den Merkmalen des Patentanspruchs 1.

Vorteilhafte Ausführungsformen und Weiterbildungen der Erfindung sind in den abhängigen Ansprüchen angegeben.

Erfindungsgemäß umfasst die Vorrichtung zur Klopfgeräuscherkennung mindestens ein Frequenzträgerelement, welches am Entstehungsort der Klopfgeräusche angekoppelt ist und die Klopfgeräusche vom Entstehungsort zum Schwingungsaufnehmer überträgt. Durch das Frequenzträgerelement wird in vorteilhafter Weise nur das Klopfgeräusch der einzelnen Zylinder ohne Störgeräusche vom Entstehungsort zum Sensorort, d.h. dem Ort des Schwingungsaufnehmers, übertragen. Die Ankopplung des Frequenzträgerelements erfolgt beispielsweise durch Fügen und/oder form- und/oder kraft- und/oder stoffschlüssiges Verbinden des Frequenzträgerelements im "Nahfeld" des Brennraumes, d.h. am Klopfgeräuschentstehungsort. Unter "Nahfeld" des Klopfgeräuschentstehungsortes sind alle Anbindungsorte des Frequenzträgerelements zu verstehen, welche unmittelbar dem Impuls bzw. der Schingungsanregung durch normale bzw. klopfende Verbrennungen unterliegen.

In Ausgestaltung der Klopfgeräuscherkennungsvorrichtung sind mehrere Frequenzträgerelemente mit einem Schwingungsaufnehmer gekoppelt.

In weiterer Ausgestaltung sind mehrere Frequenzträgerelemente über ein koppelelement miteinander und mit dem Schwingungsaufnehmer verbunden.

Das Frequenzträgerelement ist beispielsweise durch Formgestaltung und/oder Materialauswahl an das Frequenzspektrum der zu übertragenden Klopfgeräusche angepasst.

In weiterer Ausgestaltung der Klopfgeräuscherkennungsvorrichtung ist das mindestens eine Frequenzträgerelement am Zylinderkopf und/oder am Brennraumdach und/oder an einer Zylinderkopfdichtung und/oder einer Zylinderlaufbahn und/oder an einer Zylinderbuchse angebunden.

Das Frequenzträgerelement kann bündig und/oder mit Rück- oder Überstand im Brennraum enden.

In weiterer Ausgestaltung ist das Frequenzträgerelement gegen Frequenzeinstreuungen durch Isolationsmedien isoliert.

Das Frequenzträgerelement ist beispielsweise im Kurbelgehäuse und/oder im Zylinderkopf eingegossen.

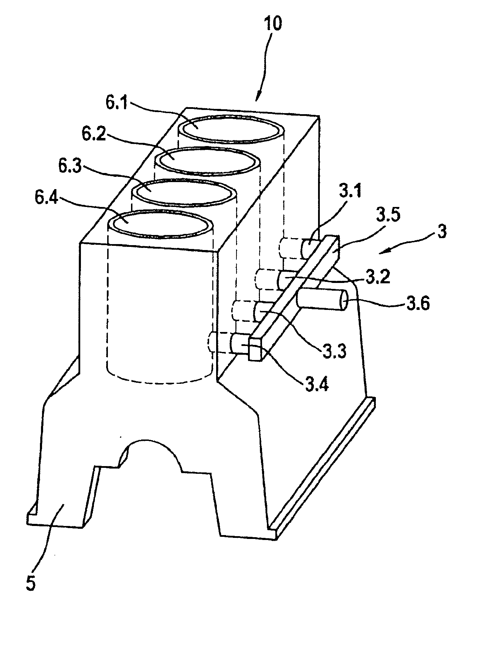

Eine vorteilhafte Ausführungsform der Erfindung ist in der Zeichnung dargestellt und wird nachfolgend beschrieben.

Die einzige Figur zeigt eine schematische Darstellung eines Verbrennungsmotors 10 mit einer erfindungsgemäßen Vorrichtung zur Klopfgeräuscherkennung 3.

Wie aus der Figur ersichtlich ist umfasst die Vorrichtung zur Klopfgeräuscherkennung 3 für einen Verbrennungsmotor 10 mehrere Frequenzträgerelemente 3.1, 3.2, 3.3 und 3..4, die über ein Koppelelement 3.5 miteinander und mit einem Schwingungsaufnehmer 3.6 verbunden sind, der beispielsweise als piezoelektrisches Element ausgeführt ist. Die Frequenzträgerelemente 3.1, 3.2, 3.3 und 3.4 übertragen die Klopfgeräusche, vom Entstehungsort 5, 6.1, 6.2, 6.3, 6.4 zum Schwingungsaufnehmer 3.6. Die einzelnen Frequenzträgerelemente 3.1, 3.2, 3.3 und 3.4 sind durch eine entsprechende Formgebung und/oder Materialauswahl an das Frequenzspektrum der zu übertragenden Klopfgeräusche angepasst.

Insbesondere bei modernen Leichtmetallmotoren deren Kurbelgehäuse und/oder Zylinderkopf aus Aluminium oder Aluminiumlegierungen aufgebaut ist, wird die Klopfgeräuschübertragung durch hochfrequente Störgeräusche erheblich beeinträchtigt, die den Nutzsignalen sehr ähnlich sind. Die Störgeräusche werden im motorischen Betrieb durch bewegte Bauteile wie z. B. Komponenten der Gaswechselsteuerung, des Grundtriebwerk, der Ausgleichswellen, Kolbenspritzen, Anbauteile, die innerhalb oder außerhalb des Motors angeordnet sind, sowie durch pneumatische und/oder hydraulische Strömungsmedien hervorgerufen und sind in den wenigsten Fällen zu vermeiden.

Bei der erfindungsgemäßen Vorrichtung zur klopfgeräuscherkennung werden über die Frequenzträgerelement 3.1, 3.2., 3.3, und 3.4 nur das Klopfgeräusch der einzelnen Zylinder 6.1, 6,2 .6.3. und 6.4 vom Entstehungsort zum Ort des Schwingungsaufnehmers 3.6 übertragen. Die Frequenzträgerelemente 3.1, 3.2, 3.3 und 3.4 sind durch geeignete Materialien von den genannten Störgeräuschen weitestgehend isoliert.

Damit die Frequenzträgerelemente 3.1, 3.2, 3.3 und 3.4 nur die Klopfgeräusche des zugehörigen Zylinders 6.1, 6.2, 6.3 und 6.4 zum Schwingungsaufnehmer 3.6 übertragen sind die einzelnen Frequenzträgerelement durch Fügen, form-, kraft- und/oder stoffschlüssige Verbindungen im "Nahfeld", d.h. am Klopfgeräuschentstehungsort angebunden. Des Weiteren ist es durch Abstimmung des Frequenzträgers 3.1, 3.2, 3.3 und 3.4 über Formgebung und/oder Materialauswahl möglich, gezielt das Frequenzspektrum des zu übertragenden Klopfgeräusches günstig zu beeinflussen.

Unter "Nahfeld" des Klopfentstehungsortes sind alle Anbindungsorte des Frequenzträgerelements 3.1, 3.2, 3.3, 3.4, zu verstehen, welche unmittelbar dem Impuls bzw. der Schwingungsanregung durch normale bzw. klopfende Verbrennung unterliegen. Das beinhaltet den Zylinderkopf mit Brennraumdach, Zylinderkopfdichtung sowie Zylinderlaufbahn und/oder Zylinderbüchsen aus anderen Materialien, wie z.B. Grauguss, Aluminium, Siliziumlegierungen, o.ä. Ebenso ist es möglich, das Frequenzträgerelement 3.1, 3.2, 3.3, 3.4 bündig, oder mit Rück- öder Überstand im Brennraum enden zu lassen.

Im dargestellten Ausführungsbeispiel sind mehrere Frequenzträgerelemente 3.1, 3.2, 3.3 und 3.4 über ein Koppelelement 3.5 mit dem Schwingungsaugnehmer 3.6 verbunden. Alternativ kann jedes der Frequenzträgerelemente mit einem eigenen Schwingungsaufnehmer 3.6 verbunden sein. Das in der Figur dargestellte Koppelement 3.6 wirkt als Klopferkennnungs- bzw. Übertragungsrail für alle Zylinder 6.1, 6.2, 6.3 und 6.4. Für das Frequenzträgerelement 3.1, 3.2, 3.3, 3.4 können geeignete: Ein- oder Mehrstoffelemente oder deren Verbindungen in ihren, jeweiligen Aggregatszuständen verwendet werden. Die Isolation gegen Frequenzeinstreuungen auf dem Übertragungswege kann beispielsweise durch berührungsbehaftete oder berührungsarme oder spaltbehaftete Ummantelung/Schirmung des Frequenzträgerelements 3.1, 3.2, 3.3, 3.4 mittels Isolationselementen erfolgen. Die Isolationselemente können ein- oder mehrschichtig und/oder in Kombination eines oder mehrerer Materialien/Medien aufgebaut sein. Die Frequenträgerelemente 3.1, 3.2, 3.3, 3.4. mit entsprechender Isolation können in das Kurbelgehäuse 5 oder in den Zylinderkopf eingegossen oder über Kanäle, Aussparungen u. dgl. zum Schwingungsaufnehmer 3.6 geführt werden. Eine weitere Möglichkeit stellt die weitestgehend freitragende, bzw. freigestellte Verbindung zwischen Klopfentstehungs- und Schwingungsaufnahmeort dar. In diesem Anwendungsfall wird das Frequenzträgerelement 3.1, 3.2, 3.3, 3.4 zwischen Schwingungseinleite- und Sensorort nur örtlich durch akustische Abkoppelelemente gehalten. Da keine direkte Berührung des Frequenzträgerelementes zu Motorkomponenten vorliegt, kann auf weitere akustisch wirkende Isolationsmaßnahmen verzichtet werden.

Bei Verwendung eines Koppelelementes 3.5, welches auch als "Klopfrail" bezeichnet wird, werden die Frequenzträgerelemente 3.1, 3.2, 3.3, 3.4 mehrerer Zylinder 6.1, 6.2, 6.3, 6.4, mit einander verbunden. Ein einziger Schwingungsaufnehmer 3.6 ist mittels geeigneter Füge- und/oder Verbindungstechnik, wie verschrauben, löten, schweißen, verkleben, o.ä. auf dem Koppelement angebracht.

Die elektrische Verbindung zu einem Motorsteuergerät oder zu anderen Auswerteelektroniken kann über elektrische oder optische Schnittstellen hergestellt werden. Eine Ummantelung der Vorrichtung zur Klopfgeräuschermittlung zum Schutz vor Korrosion, mechanischer Beschädigung, Schwingungsanregungen oder elektromagnetischen Störimpulse (EMV) kann mittels entsprechender Materialien vorgesehen sein.

## Patentansprüche

1. Vorrichtung zur Klopfgeräuscherkennung für einen Verbrennungsmotor mit einem Schwingungsaufnehmer (3.6),
**gekennzeichnet durch**
mindestens ein Frequenzträgerelement (3.1, 3.2, 3.3, 3.4), welches am Entstehungsort (5, 6.1, 6.2, 6.3, 6.4) der Klopfgeräusche angekoppelt ist und die Klopfgeräusche vöm Entstehungsort (5, 6.1, 6.2, 6.3, 6.4) zum Schwingungsaufnehmer (3.6) überträgt.

2. Klopfgeräuscherkennungsvorrichtung nach Anspruch 1
**dadurch gekenneichnet**,
dass mehrere Frequenzträgerelemente (3.1, 3.2, 3.3, 3.4) mit einem, Schwingungsaufnehmer (3.6) gekoppelt sind.

3. Klopfgeräuscherkennungsvorrichtung nach Anspruch 1 oder 2
**dadurch gekennzeichnet,**
**dass** mehrere Frequenzträgerelemente (3.1, 3.2, 3.3, 3.4) über ein Koppelelement (3.5) miteinander und mit dem Schwingungsaufnehmer (3.6) verbunden sind.

4. Klopfgeräuscherkennungsvorrichtung nach einem der Ansprüche 1 bis 3,
**dadurch gekennzeichnet,**
**dass** das Frequenzträgerelement (3.1, 3.2, 3.3, 3.4) durch Formgestaltung und/oder Materialauswahl an das Frequenzspektrum der zu übertragenden Klopfgeräusche angepasst ist.

5. Klopfgeräuscherkennungsvorrichtung nach einem der Ansprüche 1 bis 4,
**dadurch gekennzeichnet,**
**dass** das Frequenzträgerelement (3.1., 3.2, 3.3, 3.4) am Zylinderkopf und/oder am Brennraumdach und/oder an einer Zylinderkopfdichtung und/oder einer Zylinderlaufbahn und/oder an einer Zylinderbuchse (6.1, 6.2, 6.3, 6.4) angebunden ist.

6. Klopfgeräuscherkennungsvorrichtung nach einem der Ansprüche 1 bis 5,
**dadurch gekennzeichnet.**
**dass** das Frequenzträgerelement (3.1, 3.2, 3.3, 3.4) bundig und/oder mit Rück- oder Überstand im Brennraum endet.

7. Klopfgeräuscherkennungsvorrichtung nach einem der Ansprüche, 1 bis 6,
**dadurch gekennzeichnet,**
**dass** das Frequenzträgerelement (3.1, 3.2, 3.3, 3.4) gegen Frequenzeinstreuungen durch Isolatormedien isoliert ist.

8. Klopfgeräuscherkennungsvorrichtung nach einem der Ansprüche 1 bis 7,
**dadurch gekennzeichnet,**
**dass** das Frequenzträgerelement (3.1, 3.2, 3.3, 3.4) in das Kurbelgehäuse (5) oder in den Zylinderkopf eingegossen ist.
